# EUROPEAN PATENT APPLICATION

(11) **EP 0 716 499 A1**
(43) Date of publication of application: **12.06.1996**
(21) Application number: 95203180.5
(22) Date of filing: 20.11.1995
(51) Int. Cl.: H02P 6/08

(54) **Controller for a brushless DC Motor**

(30) Priority: 07.12.1994 US 350605
(71) Applicant: GENERAL MOTORS CORPORATION, Detroit Michigan 48202 (US)
(72) Inventor: Klode, Harald, Centerville, Ohio 45458 (US); Disser, Robert John, Dayton, Ohio 45419 (US)
(74) Representative: Denton, Michael John

(57) **Abstract**

A controller (30) for a brushless DC motor (20) provides driving signals (S1*, S2*, S3*) to an electronic commutator (32) in two distinctly different modes defined by a predetermined transition speed. An encoder (26) supplies motor position signals (S1, S2, S3) to the controller for use in generating the driving signals. At speeds below the transition speed, the driving signals are generated in phase with the position signals to maximize motor torque. At speeds above the transition speed, the phase of the driving signals is substantially advanced to maximize motor no-load speed.

## Description

This invention relates to a controller which changes the torque-speed characteristics of a brushless DC motor as a function of motor speed.

### Background of the Invention

The design of an electric motor customarily involves a trade off between speed and torque requirements. Generally, motor output speed decreases linearly with output torque, while the motor current at the same time increases with output torque. Especially in a motor with permanent magnets, the maximum speed the motor can achieve and the maximum torque the motor delivers for a certain current are in a fixed relationship to one another. If a permanent magnet motor is designed to deliver a prescribed output torque for a specified current, the maximum output speed at a given voltage is automatically determined and cannot be increased arbitrarily through redesign without violating the torque/current relationship that was initially established. Therefore, the design of a permanent magnet brushless DC motor involves a compromise between conflicting torque and speed requirements.

It is known that the impedance of a brushless DC motor is primarily resistive at low rotational speeds and becomes increasingly reactive with increasing speed. This causes a phase shift of the magnetic fields which are induced in the stator, which, in turn, reduces the torque produced by the motor. The prior art has addressed this particular problem by advancing the phase of the current supplied to the stator windings to maintain a high output torque. The control systems for providing the phase-shifted current are generally quite complex and attempt continuously varying adjustment as a function of speed. Additionally, they do not address the problem of providing high no-load speed while retaining high torque capability during start-up or under stalling conditions.

### Summary of the Invention

The present invention is directed to a control system and method for maximizing the no-load speed of a brushless DC motor without loss of starting torque. A control system and method in accordance with the present invention is defined by the features specified in claims 1 and 6.

According to the present invention, a dual mode controller causes the motor to operate in one of two different modes, depending upon motor speed. At low speeds, the motor operates in a first, BASE SPEED mode where it has a maximum torque constant and develops a base no-load speed. When the motor reaches a predetermined transition speed, the controller switches the motor to a second, HIGH SPEED mode characterized by a continually increasing speed/torque ratio. By switching to the HIGH SPEED mode, the controller causes the maximum speed of the motor to increase substantially over that which could be obtained in the BASE SPEED mode.

A position encoder is coupled to the motor and provides motor position signals to the dual mode controller. The dual mode controller uses the position signals to develop driving signals which it passes on to a conventional electronic commutator. During operation in the BASE SPEED mode, the dual mode controller generates the driving signals in phase with the position signals. The commutator uses the driving signals to generate gate control signals for an inverter. The inverter responds to the gate control signals and to a DC voltage source by generating polyphase AC driving currents for the stator windings of the brushless DC motor.

In the HIGH SPEED mode, the dual mode controller advances the phase of driving signals by a predetermined amount, dependent upon the number of current phases being supplied to the motor. In the case of a three-phase motor, the phase advance is approximately 60 electrical degrees or about 2.8 milliseconds at 3600 RPM. The controller further incorporates a hysteresis band around the transition speed in order to avoid hunting between modes.

The dual mode controller recognizes the direction of rotation of the motor; i.e., the phasing sequence of the position signal from the encoder, and generates driving signals as a function of the direction of rotation to assure an advance for both directions of rotation.

### Description of the Drawings

The present invention will now be described, by way of example, with reference to the accompanying drawings in which:

FIG. 1 is a schematic block diagram of a dual mode control system for a brushless DC motor.

FIGS. 2A-2L illustrate signal waveforms associated with operation of the apparatus of FIG. 1.

FIG. 3 is a plot of performance information for the apparatus.

FIG. 4 is a detailed schematic diagram of a dual mode controller.

### Description of the Preferred Embodiment

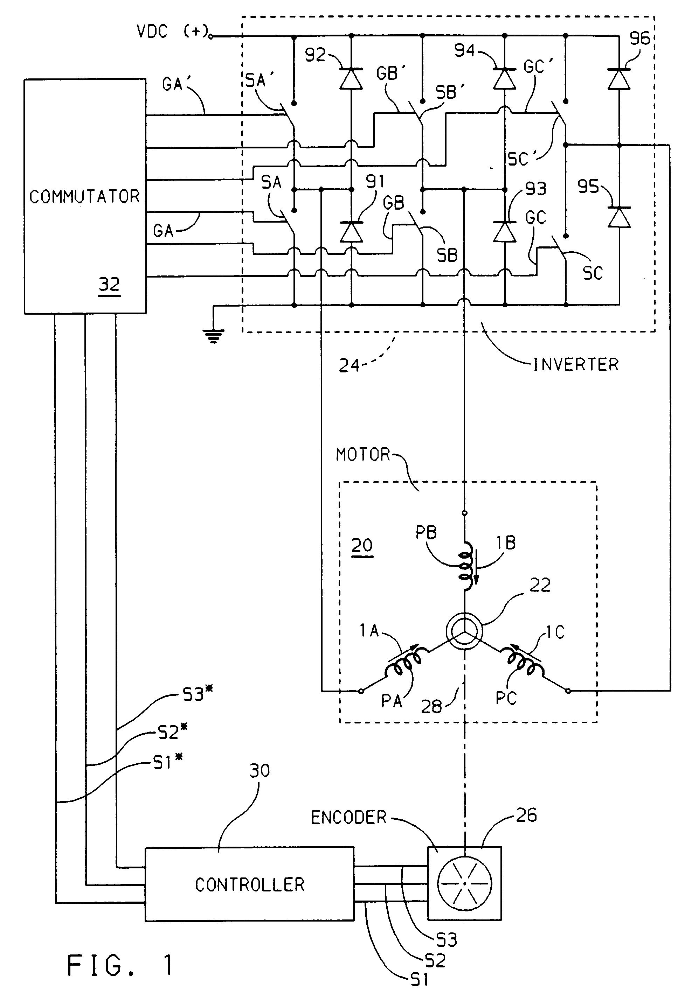

Referring to the drawings, FIG. 1 illustrates a three-phase brushless DC motor 20 being controlled in accordance with the present invention. Motor 20 has three Y-connected stator windings PA, PB and PC driving a permanent magnet rotor 22. Windings PA, PB and PC carry AC currents IA, IB and IC, respectively. These currents are supplied by an inverter 24 and are mutually phase-separated by 120 degrees. As hereinafter described in detail, motor 20 has two distinctively different modes of operation -- a BASE SPEED mode and a HIGH SPEED mode.

In the BASE SPEED mode, a Hall effect encoder 26 monitors the rotation of rotor 22 and generates three position signals S1, S2 and S3. These position signals are applied to three separate lead lines, which for ease of understanding, are indicated by reference characters S1, S2 and S3, respectively. The Hall effect link between encoder 26 and rotor 22 is indicated by the reference numeral 28.

Position signals S1, S2, S3 are sent to a dual mode controller 30 which transforms them into driving signals S1*, S* and S3*, respectively. The relationship between position signals S1, S2, S3 and driving signals S1*, S2* and S3* depends upon the operating mode, as shown in Table I and discussed in detail below. During operation in the BASE SPEED mode, the two signal sets are the same.

**TABLE I**

| | | | |
|---|---|---|---|
| | S1* | S2* | S3* |
| n < nₜᵣ .......... | S1 | S2 | S3 |
| n > = nₜᵣ & S_{R} = 1 | S2⁻¹ | S3⁻¹ | S1⁻¹ |
| n > = nₜᵣ & S_{R} = 0 | S3⁻¹ | S1⁻¹ | S2⁻¹ |

where:
- nₜᵣ: = transition speed
- Sk⁻¹: = invert of Sk; k = 1,2,3
- S_{R}: = rotational direction

Driving signals S1*, S2*, S3* are applied to an electronic commutator 32 of conventional design which uses driving signals S1*, S2*, S3* for generation of six gate control signals GA. GA'; GB, GB'; GC and GC'. These gate control signals selectively control power switches SA, SA'; SB, SB'; and SC, SC', respectively. The six power switches are arranged in parallel with diodes 91-96.

In the BASE SPEED mode, the gate signals control the power switches such that current flow into motor 20 is maintained through two of the three motor windings PA, PB, PC at any one time. The current is supplied to different winding pairs in sequence and at the correct magnitude and phase to produce an electromagnetic torque of constant magnitude and direction. The waveform of the current has a frequency proportional to the frequency of the gate signals and a peak magnitude which varies with changes in the voltage of the DC power supply. The motor speed is controlled by adjusting the DC voltage.

The operation of commutator 32 is such that periods of current flow through each individual winding correspond to periods of constant induced voltage in that winding, and also such that the direction of current flow through each winding corresponds to the polarity of the induced voltage in that winding. The maximum rotational speed of rotor 22 occurs when the induced voltage in two of the three windings due to the relative motion of the magnetic field of the rotor balances the supply voltages being provided by inverter 24.

During operation in the HIGH SPEED mode, the driving signals S1*, S2*, S3* are time-advanced 60 electrical degrees by controller 30. This causes the currents IA, IB, IC to advance (but only by 30 degrees in phase), which reduces the effective induced voltage in the windings. Consequently, the rotor speeds up until the effective induced voltage balances the supply voltage. In a typical application, such a mode change will increase the maximum rotor speed by a factor of about 2.4.

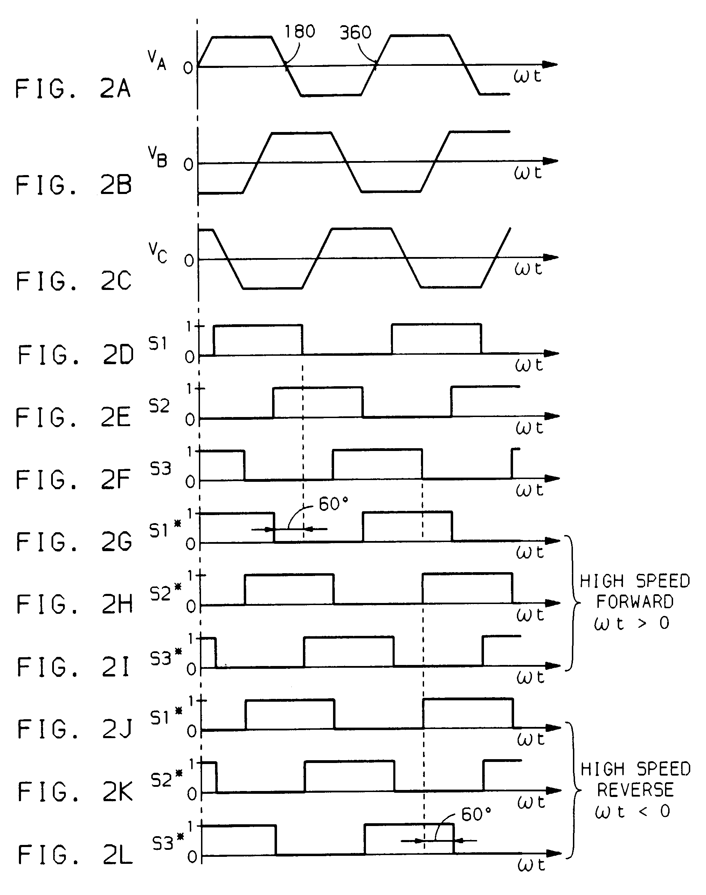

FIGS. 2A-2C illustrate waveforms of the three voltages VA, VB and VC which are impressed across the three windings PA, PB and PC, respectively. These voltages correspond to the position angles of the rotor relative to the stator windings PA, PB, PC and are sensed by encoder 26 for use in generating the three position signals S1, S2, S3. As illustrated in FIGS. 2D-2F, the position signals switch from LO to HI when the winding voltage begins rising, and from HI to LO when the winding voltage begins falling.

Shown in FIGS. 2G-2L are two sets of waveforms for the driving signals S1*, S2* and S3*. Both sets of driving signal waveforms are for operation in the HIGH SPEED mode; the upper set of FIGS. 2G-2I being for rotor rotation in the forward direction, and the lower set of FIGS. 2J-2L being for rotor rotation in the reverse direction. In each case, the driving signals are advanced, in the appropriate direction, 60 electrical degrees relative to the corresponding rotor position angles.

Controller 30 accomplishes the appropriate driving signal advancement through the logical transformations indicated above in Table I. In order to perform these transformations, controller 30 needs to know the rotor speed, rotor direction and transition speed. These parameters are determined by controller 30 as described below. Additionally, controller 30 incorporates a hysteresis band of 50-200 RPM around the transition speed to prevent mode hunting, and during which time the phase of the driving signals are fixed (i.e., maintained at a constant value).

Controller 30 may be readily implemented in either hardware or software. In one preferred embodiment, control 30 may comprise an EP600 PLD chip 40 and a comparator 42, as illustrated in FIG. 4. All of the digital logic for signal transformation is programmed into chip 40, while comparator 42 signals chip 40 when the transition speed has been reached. Chip 40 is programmed to change the mode at that time and to maintain the driving signals in a fixed form until a predetermined number of position pulses (3 pulses in the described embodiment) have been received from encoder 26. These position pulses correspond to the hysteresis band, which is set by comparator 42 and resistors 44, 46 and 47.

Chip 40 generates a square wave of 50% duty cycle on an output line denoted by the reference characters SPD. The SPD signal is clocked by the position signals S1, S2, S3 and therefore has a frequency proportional to the speed of rotor 22. In the illustrated embodiment, the SPD signal comprises 6 pulses per rotor rotation, so for a typical rotor speed of 4,000 RPM, SPD will have a frequency of 400 Hz. This signal is applied to an inverting input terminal 48 of comparator 42. A capacitor 52 is also connected to terminal 48. This capacitor is charged by the SPD pulses and is discharged between pulses.

A pair of resistors 44, 46 are connected to a non-inverting input terminal 50 of comparator 42. These resistors provide a reference voltage for comparator 42. At high speeds, the voltage across capacitor 52 is reset before it has time to reach the reference voltage on terminal 50 of comparator 42. At low speeds, the peak voltage across capacitor 52 exceeds the reference voltage.

Comparator 42 produces an output signal LO/HI which is fed back to chip 40 and sampled at precisely timed intervals. This signal remains HI for speeds above the transition speed. For speeds below the transition speed, the LO/HI signal goes LO for brief time periods spanning the sampling interval of chip 40. The sampled state of the LO/HI signal is used by chip 40 in order to implement the logic of Table I. Chip 40 establishes the direction of rotation by checking the phases of position signals S1, S2, S3. For forward rotation, S1 will lead S2, while for reverse rotation, the opposite will be true.

It will be understood that resistors 44, 46 and 49, and capacitor 52 are selected so as to provide an analog timing circuit which will time out during the interpulse period at a predetermined transition speed. This function could be provided by digital circuitry, either inside chip 40 or in another device.

Chip 40 functions as a three flip-flop state machine to establish the operating state of motor 20 and thereby implement the logic of Table I. The techniques involved in preparing a state diagram and programming chip 40 are routine and need not be described in detail. It would also be a matter of routine programming to implement the logic of Table I in any one of numerous, commercially available microprocessors.

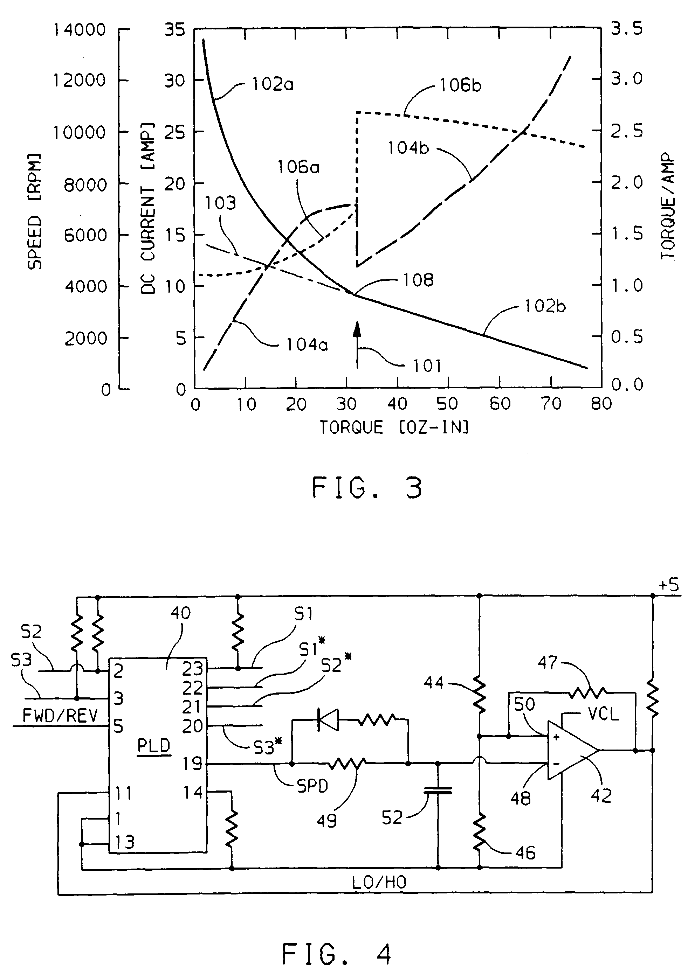

FIG. 3 illustrates test data for a typical three-phase brushless DC motor operated in accordance with this invention. Attention is drawn to the arrow 101 which indicates a mode transition between low speed operation and high speed operation. The plot of FIG. 3 illustrates three curves, each of which has two pieces, one for the BASE SPEED mode and one for the HIGH SPEED mode.

Curve pieces 102a, 102b are a plot of speed versus torque. As shown by the curve piece 102b, the motor speed increased linearly with decreasing torque up to point 108, where the mode change occurred. The phantom line 103 indicates an extension of line 102b to show what the motor speed variation would have been without the mode change. It is seen that the mode change occurred at a speed of about 3800 RPM, where the motor was delivering a torque of about 31 ounce inches. Following the mode change, the speed increased rapidly with decreasing torque, as illustrated by the curve 102a. Under no load conditions, the motor reached a speed in excess of 12000 RPM, whereas less than half of that speed would have been reached without the mode change.

Curve portions 104a, 104b indicate the variation of DC current with torque for HIGH SPEED and BASE SPEED operation, respectively. Curve portions 106a, 106b, respectively show the corresponding torque per amp. It will be seen that during low speed high torque operation, the motor delivers about 2.5 ounce inches per amp, wherein for high speed operation, it delivers a torque per amp ratio which decreases from about 1.6 down to about 1.1. Thus, the invention effectively converts torque generating capability into increased speed when the current phase is advanced approximately 60 degrees relative to no load voltage.

## Claims

1. Control apparatus for a brushless, polyphase DC motor (20) comprising:
a position encoder (26) for generating position signals (S1, S2, S3) indicative of the rotational position of the motor;
a dual mode controller (30) for generating driving signals (S1*, S2*, S3*) which are in phase with the position signals when the motor is operating at a speed below a predetermined transition speed and which are advanced relative to the position signals when the motor is operating at a speed above the predetermined transition speed; and
a power supply means for connection to a DC power source and generation of polyphase AC currents in timed relation with the driving signals for transmission to stationary windings of the motor.

2. Control apparatus according to Claim 1, wherein the power supply means comprises an electronic commutator (32) for generating gating signals in synchronism with the driving signals and an inverter (24) for converting DC current from the DC power source into the polyphase AC currents in synchronism with the gating signals.

3. Control apparatus according to Claim 1, wherein the position encoder comprises Hall effect sensing means.

4. Control apparatus according to Claim 1, wherein the motor is a three-phase brushless DC motor and the predetermined amount of phase advancement is a phase angle of approximately 60 electrical degrees.

5. Control apparatus according to Claim 1, wherein the dual mode controller comprises a hysteresis band means for maintaining the phase of the driving signals for a predetermined range of motor speeds around the predetermined transition speed.

6. Method of driving a brushless, polyphase DC motor comprising the steps of:
(i) supplying a DC voltage at a first level;
(ii) generating a sequence of gating pulses at a first frequency;
(iii) generating, as a function of the gating pulses, polyphase AC currents having maximum values corresponding to the level of the DC voltage and at a frequency proportional to the frequency of the sequence of gating pulses;
(iv) applying the polyphase AC currents to different stator windings of the motor, thereby causing rotation of the motor;
(v) generating a plurality of sequences of position pulses, each of the sequences of position pulses indicative of the rotational position of a different one of the stator windings;
(vi) sensing the rotational speed of the motor;
(vii) generating, while the rotational speed is below a predetermined transition value, a sequence of driving pulses corresponding to, and in phase with, each of the sequences of position pulses;
(viii) adjusting the frequency and phase of the gating signals for synchronism with the sequences of position pulses;
(ix) increasing the level of the DC voltage;
(x) repeating steps (iii) through (viii);
(xi) repeating steps (ix) and (x) until the rotational speed reaches the predetermined transition value;
(xii) advancing, after the rotational speed reaches the predetermined transition value, the phase of the sequences of driving pulses by a predetermined amount relative to said sequences of position pulses;
(xiii) maintaining the phase of the sequences of driving pulses in advance of the sequences of position pulses by the predetermined amount for a predetermined range of rotational speeds around the predetermined transition value;
(xiv) repeatedly adjusting the level of the DC voltage;
(xv) repeating steps (iii) through (viii) for each repetition of step (xiv); and
(xvi) maintaining the phase of the sequence of driving pulses in advance of the sequence of position pulses by the predetermined amount while the rotational speed remains above the predetermined transition value.

7. The method according to Claim 6, wherein the motor is a three-phase brushless DC motor and the predetermined amount of phase advancement is a phase angle of approximately 60 electrical degrees.

8. The method according to Claim 6, wherein the predetermined range of rotational speeds provides for a hysteresis band around the predetermined transition value.
